(19) Europäisches Patentamt European Patent Office Office européen des brevets

(11) **EP 2 504 950 B1**

(12) **FASCICULE DE BREVET EUROPEEN**

(45) Date de publication et mention de la délivrance du brevet:
**20.09.2017 Bulletin 2017/38**

(21) Numéro de dépôt: **10803597.3**

(22) Date de dépôt: **19.11.2010**

(51) Int Cl.:
***H04L 12/18*** *(2006.01)*

(86) Numéro de dépôt international:
**PCT/FR2010/052456**

(87) Numéro de publication internationale:
**WO 2011/067495 (09.06.2011 Gazette 2011/23)**

(54) **CONTROLE D'ADMISSION POUR ABONNEMENT DE SERVICE**

ZUGANGSSTEUERUNG FÜR EINE DIENSTANMELDUNG

ACCESS CONTROL FOR A SERVICE SUBSCRIPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2009 FR 0958316**

(43) Date de publication de la demande:
**03.10.2012 Bulletin 2012/40**

(73) Titulaire: **Orange**
**75015 Paris (FR)**

(72) Inventeurs:
• **LEMOINE, Benoît**
**F-22300 Ploubezre (FR)**
• **IBRAHIM, Houmed**
**F-22300 Lannion (FR)**

(74) Mandataire: **Cabinet Plasseraud**
**66, rue de la Chaussée d'Antin**
**75440 Paris Cedex 09 (FR)**

(56) Documents cités:
EP-A1- 1 892 881    EP-A2- 2 053 804
WO-A1-2005/071903    CA-A1- 2 276 681
US-A- 5 982 748

**Description**

La présente invention concerne un contrôle d'admission dans un réseau de communication, et plus particulièrement un contrôle d'admission relatif à un abonnement à un service, qui peut notamment être un service de multidiffusion (ou 'multicast').

Le contrôle d'admission à un réseau de communication permet de décider d'accepter ou de refuser une demande d'utilisation de ressources du réseau, en fonction de certains critères. Il peut notamment permettre une utilisation efficace des ressources du réseau, notamment en refusant une demande d'utilisation de ressources qui serait susceptible d'entraîner une congestion du réseau.

Il est intéressant de mettre en place un tel contrôle d'admission dans des réseaux de communication de type IP (pour 'Internet Protocol'). Ce type de réseaux permet d'offrir différents services tels que des services téléphoniques (VoIP pour 'Voice over IP'), de la vidéo téléphonie (V2oIP pour 'Voice and Video Internet Protocol') ou encore de la diffusion vidéo (IPTV pour Internet Protocol TeleVision').

Dans de tels réseaux IP, il est possible d'effectuer des transmissions de paquets selon une liaison point à point, dite liaison IP unicast, ou encore selon une liaison point à multipoints, dite liaison IP multicast ou liaison de multidiffusion. Selon ce dernier type de liaison, les paquets IP multicast sont acheminés dans le réseau IP et sont répliqués à partir d'une localisation, relativement proche des terminaux multicast destinataires. Ce mode de transport permet d'établir une connectivité point à multipoint unidirectionnelle entre une adresse source IP unicast quelconque et une pluralité de terminaux IP, et ainsi de diffuser des paquets à ces terminaux notamment dans le cadre d'un service de multidiffusion pour des contenus numériques tels que des contenus vidéo par exemple.

Afin de recevoir un contenu diffusé dans le réseau selon une transmission multicast, un terminal s'abonne à une adresse IP multicast correspondante. Puis, suite à cet abonnement, il reçoit le contenu multi diffusé.

Dans certains cas, l'interface d'accès d'un terminal ainsi abonné à un ou plusieurs services de multidiffusion peut être congestionnée. Une telle congestion peut dégrader la qualité du service de multidiffusion au niveau de ce terminal.

Afin d'éviter ce type de congestion, le document US2008112324 propose la mise en place d'un contrôle d'admission qui décide d'accepter ou de refuser un nouvel abonnement d'un terminal à un service de multidiffusion en prenant en compte le nombre d'adresses IP multicast (ou adresses de services de multidiffusion) auxquelles il est déjà abonné ou le débit total que ce terminal reçoit déjà. En procédant ainsi, le système proposé permet de limiter les congestions dans le cas où on est en mesure de connaitre une estimation du débit au niveau de l'interface d'accès pour chaque adresse IP multicast à laquelle le terminal est déjà abonné.

Tel peut être le cas lorsque l'adresse IP source de la transmission multicast correspond à un serveur mis en oeuvre par un fournisseur de contenu ou encore par un opérateur de réseau. En effet, dans ce cas il est possible de contrôler le débit généré par le serveur. Des autres exemples de contrôle d'admission à un service et de limitation de la bande passante assignée à chaque utilisateur sont divulgués par les brevets CA 2 276 682 A1 et WO 2005/071903 A1. Toutefois, ce type de contrôle d'admission ne permet pas d'éviter efficacement une congestion sur l'interface d'accès dans le cas où un terminal quelconque du réseau peut lui-même devenir une source de service de multi diffusion à laquelle d'autres terminaux du réseau peuvent s'abonner.

En effet, dans ces conditions, il n'est pas possible d'estimer le débit généré par un terminal source d'un service multidiffusion et qu'un abonné sera susceptible de recevoir au cours de la période de son abonnement à ce service de multidiffusion.

La présente invention vient améliorer la situation selon le procédé et le système inclus dans les revendications 1-13. Un premier aspect de la présente invention propose un procédé de gestion d'abonnement à un service offert dans un réseau de communication par un premier terminal ; ledit réseau de communication comprenant un second terminal et ledit service comprenant une transmission d'informations numériques ;

dans lequel une entité d'admission du réseau obtient préalablement une valeur maximale de débit montant et une valeur de débit descendant respectivement allouées aux premier et second terminaux ;

ledit procédé comprenant les étapes suivantes au niveau de l'entité d'admission du réseau:

/1/ recevoir une requête d'admission pour un abonnement du second terminal au service offert par le premier terminal;

/2/ prendre une décision d'admission ou de refus d'abonnement du second terminal sur la base de la valeur maximale de débit montant allouée au premier terminal et de la valeur de débit descendant allouée au second terminal ; et

/3/ émettre une réponse indiquant ladite décision.

On entend par les termes 'réseau de communication' tout type de réseau comme par exemple des réseaux de communication sans fil, mobile, ou encore fixe. Ce réseau peut notamment être un réseau IP selon le protocole Internet.

On entend par le terme 'terminal' tout type de terminal adapté pour communiquer dans le réseau de communication considéré, comme un téléphone fixe, un téléphone mobile, un ordinateur

On entend par les termes 'valeur maximale de débit montant allouée à un terminal' la valeur de débit qu'un terminal n'est pas autorisé à dépasser pour les flux sortants qu'il émet à destination du réseau de communication.

On entend par les termes 'informations numériques' toutes informations adaptées pour être transportées dans le réseau de communication selon un protocole de transmission adapté. Ces informations numériques peuvent notamment correspondre à des documents, des contenus numériques de types vidéo ou audio, des images, etc ...

Dans le réseau considéré, il est possible d'allouer des valeurs maximales de débit montant à différents terminaux. Cette allocation de valeur maximale permet de limiter le débit de flux total émis par un terminal sur le réseau de communication considéré. En outre, dans un mode de réalisation de la présente invention, des valeurs de débit descendant peuvent par ailleurs être allouées à certains des terminaux du réseau. On entend par les termes 'valeur de débit descendant allouée à un terminal' la valeur de débit que l'on peut garantir en réception pour un terminal depuis le réseau de communication. Ainsi, il est possible que dans certaines conditions le terminal puisse recevoir un débit descendant plus élevé mais ce débit n'est pas garanti si sa valeur est supérieure à la valeur de débit descendant allouée.

Dans ces conditions, il est prévu de décider d'admettre ou non une requête d'admission pour un abonnement pour un terminal déterminé en prenant en compte à la fois :

- la valeur maximale de débit montant allouée au premier terminal, c'est-à-dire au terminal qui offre le service considéré ; et
- la valeur de débit descendant allouée au second terminal.

En procédant ainsi, il est avantageusement possible de prévenir un état de congestion sur l'interface d'accès au réseau. En effet, dans ce contexte, le premier terminal est le terminal qui offre le service considéré. Une valeur maximale de débit montant est allouée à ce premier terminal. Ainsi, dans ce réseau le premier terminal est limité dans son débit sortant vers le réseau à cette valeur maximale. Par conséquent, quelque soit le service que ce premier terminal est en mesure de fournir, en aucun cas il ne pourra représenter un débit de flux de données supérieur à cette valeur maximale. Il convient de considérer qu'en réception, un terminal abonné à ce service ne recevra donc pas, dans le contexte de ce service, un débit supérieur au débit montant maximum auquel est autorisé le premier terminal.

En considérant ces deux valeurs de débit, il est aisé de prévenir de manière pertinente des congestions pour tout nouvel abonnement à un service offert dans le réseau par un des terminaux du réseau.

Ces dispositions peuvent aisément être appliquées à tout type de service offert à un ou plusieurs terminaux par un autre terminal du réseau. Elles sont particulièrement avantageuses dans le contexte d'un service de multidiffusion offert dans le réseau par un terminal.

En effet, il est d'autant plus avantageux de veiller à éviter une congestion dans le contexte d'un service de multidiffusion qui est par nature plus susceptible d'entraîner des congestions sur l'interface d'accès au réseau. Toutefois, aucune limitation n'est attachée au type de service offert dans le réseau. La présente invention couvre tout type de service qui comprend une étape de transmission d'informations numériques depuis un terminal vers un autre terminal d'un réseau de communication, cette transmission pouvant être basée sur une liaison point à point ou encore sur une liaison point à multipoint.

Dans un mode de réalisation de la présente invention, au moins un autre service est offert dans le réseau par au moins un autre terminal auquel est allouée une valeur maximale de débit montant. Le second terminal est déjà abonné à cet autre service. La valeur maximale de débit montant allouée à cet autre terminal est mémorisée en tant que valeur de débit de service associée au second terminal. Dans ce contexte, on peut prévoir d'effectuer l'étape /2/ sur la base en outre de la valeur de débit de service.

Puis, si l'abonnement requis est admis à cette étape /2/, alors la valeur maximale de débit montant allouée au premier terminal est additionnée à la valeur de débit de service associée au second terminal.

Autrement dit, ici, la prise de décision concernant l'admission de l'abonnement requis au service prend en compte une autre valeur de débit qui correspond à la somme des éventuelles valeurs de débit correspondant aux éventuels services auxquels le terminal concerné est déjà abonné. Par conséquent, cette prise de décision peut être plus fine et peut permettre une meilleure anticipation des congestions à venir sur les interfaces d'accès au réseau de communication. Sur admission de l'abonnement requis, la valeur de débit de service associée au second terminal est mise à jour en y ajoutant la valeur maximale de débit montant allouée au premier terminal, c'est-à-dire au nouvel abonnement qui vient d'être admis.

La valeur de débit de service associée au second terminal représente donc en fait la somme des valeurs maximales de débits montants respectivement allouées aux terminaux offrant les services auxquels le second terminal est abonné.

Dans un mode de réalisation de la présente invention, le procédé de gestion d'abonnement comprend en outre les étapes suivantes :

/a/ recevoir une information relative à un désabonnement du second terminal au service offert par le premier terminal ;
/b/ mettre à jour la valeur de débit de service associée au second terminal en soustrayant la valeur maximale de débit montant allouée au premier terminal ;
/c/ acquitter la réception de cette information relative au désabonnement.

Grâce à ces dispositions, lorsque le second terminal abonné au service offert par le premier terminal se désabonne, la valeur de débit de service est également mise à jour en soustrayant la valeur maximale de débit montant allouée au terminal offrant le service considéré. Par conséquent, la prise de décision d'admission est prise sur la base d'informations mises à jour au fil du temps et peut donc rester pertinente malgré certaines évolutions.

Afin de suivre les évolutions de certaines caractéristiques du réseau, il est aussi prévu que, dans un mode de réalisation, lorsque la valeur maximale de débit montant allouée au premier terminal est augmentée, les étapes /2/ et /3/ sont à nouveau effectuées.

Il peut être pertinent de prendre en compte d'éventuelles évolutions quant aux valeurs maximales de débit montant allouées aux terminaux offrant des services dans le réseau de communication. Ainsi, lorsqu'une variation de valeur maximale est détectée, l'étape de prise de décision d'admission est ici à nouveau effectuée pour contrôler si malgré ce changement les critères d'admission sont toujours satisfaits. Si tel n'est pas le cas, alors le terminal abonné en est informé.

Ces étapes peuvent être mises en oeuvre au niveau d'une entité d'admission en charge de prendre la décision d'admission ou de refus d'abonnement. On peut alors prévoir que soit le terminal émet une requête de désabonnement au service sur réception de cette nouvelle information reçue depuis l'entité d'admission, soit l'entité d'admission requiert elle-même le désabonnement au service pour ce terminal.

Quelque soit le mécanisme utilisé ici en cas d'évolution de la valeur maximale de débit montant allouée à un terminal offrant un service, lorsqu'un désabonnement est décidé, il peut être avantageux de sélectionner, parmi les éventuels abonnements admis pour le second terminal, celui qui représente le débit le plus important, c'est-à-dire la valeur maximale de débit montant la plus importante.

Il est avantageux de prévoir de stocker par service offert une information concernant les terminaux abonnés à ce service. Ainsi, quand cette caractéristique évolue, il est alors possible d'effectuer à nouveau les étapes /2/ et /3/ pour chacun des terminaux abonnés au service pour lequel cette caractéristique de débit montant a évolué.

Il peut être également pertinent de prévoir de s'adapter à d'autres évolutions. Ainsi, lorsque la valeur de débit descendant allouée au second terminal est réduite, on peut effectuer à nouveau les étapes /2/ et /3/.

Là aussi, si cette évolution entraîne le fait que les critères d'admission de l'étape /2/ ne sont plus vérifiés, alors il peut être pertinent de déclencher un désabonnement à un service pour le terminal concerné, comme décrit ci-dessus.

Dans un mode de réalisation, le service offert est un service de multidiffusion. Une première adresse d'envoi individuel et une seconde adresse de multidiffusion étant allouées au premier terminal, et une troisième adresse d'envoi individuel étant allouée au second terminal; la valeur maximale de débit montant allouée au premier terminal est stockée en association avec la première adresse d'envoi individuel et la valeur de débit descendant allouée au second terminal est stockée en association avec la troisième adresse d'envoi individuel ; et la requête d'admission indique la première adresse relative au premier terminal et la troisième adresse relative au second terminal.

On entend par les termes 'adresse d'envoi individuel' une adresse dans le réseau allouée à un terminal qui permet à ce dernier d'établir une communication point à point dans le réseau. On entend par les termes 'adresse de multidiffusion' une adresse allouée à un terminal dans le réseau qui permet à ce dernier de diffuser à destination d'un ensemble d'adresses un flux de données dans le réseau. Cet ensemble d'adresses peut correspondre à un ensemble de terminaux qui se sont abonnés à l'adresse multidiffusion considérée.

Ici, le réseau de communication peut par exemple être un réseau de type IP, la couche IP permettant un abonnement de terminaux à une adresse de multidiffusion d'un autre terminal.

En prévoyant de structurer ainsi le stockage des informations, c'est-à-dire sur la base des adresses unicast allouées aux terminaux du réseau, il est ensuite aisé de mettre en oeuvre le contrôle de paramètres d'admission selon un mode de réalisation de la présente invention.

L'architecture du réseau considéré peut être telle que les terminaux ont accès au réseau via une entité d'accès.

Ainsi, le second terminal a accès au réseau via une entité d'accès ; et le procédé comprend les étapes suivantes au niveau de ladite entité d'accès :

> /i/ recevoir une requête d'abonnement du second terminal au service offert par le premier terminal ;
> /ii/ transmettre une requête d'admission pour cet abonnement à une entité d'admission ; et
> /iii/ sur réception d'une réponse indiquant l'admission du second terminal au service, transmettre les informations numériques reçues au second terminal,

dans lequel à l'étape /ii/, si ledit service n'est pas déjà reçu, les étapes suivantes sont effectuées :

- émettre une requête d'abonnement au service à destination du réseau ;
- recevoir les informations numériques.

Ainsi, dans ce cas, l'entité d'accès est en charge de déclencher la transmission des informations numériques jusqu'à elle dès lors que le premier des terminaux dont elle a la charge le requiert.

Le procédé peut comprendre en outre les étapes suivantes au niveau de l'entité d'accès :

- recevoir une requête de désabonnement du second terminal au service offert par le premier terminal ;
- transmettre une information relative à un désabonnement à l'entité d'admission ; et
- stopper la transmission des informations numériques à destination du second terminal,

dans lequel, lorsque le second terminal est le dernier terminal abonné au service pour l'entité d'accès, ladite entité d'accès transmet la requête de désabonnement au réseau.

Un deuxième aspect de la présente invention propose une entité d'admission adaptée pour mettre en oeuvre un procédé selon le premier aspect de la présente invention.

Un troisième aspect de la présente invention propose un système de gestion d'abonnement comprenant une entité d'admission selon le deuxième aspect de la présente invention et comprenant une entité d'accès adaptée pour mettre en oeuvre certains aspects du procédé de gestion selon le premier aspect de la présente invention.

Dans un tel système de gestion d'abonnement, l'entité d'accès peut être adaptée pour limiter le débit montant du premier terminal en-deçà de la valeur maximale de débit montant qui lui est allouée.

Un quatrième aspect de la présente invention propose un équipement de commutation globale de réseau adapté pour mettre en oeuvre un procédé selon le premier aspect de la présente invention.

Un cinquième aspect de la présente invention propose un programme d'ordinateur comportant des instructions pour la mise en oeuvre du procédé selon le premier aspect de la présente invention, lorsque ce programme est exécuté par un processeur.

Un sixième aspect de la présente invention propose un support d'enregistrement sur lequel est stocké le programme d'ordinateur selon le cinquième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre une architecture d'un système de communication selon un mode de réalisation de la présente invention ;
- la figure 2 illustre les principales étapes d'un procédé de gestion d'un service selon un mode de réalisation de la présente invention ;
- la figure 3 illustre un exemple de mise en oeuvre du procédé de gestion d'abonnement à un service selon un mode de réalisation de la présente invention dans un système tel qu'illustré en figure 1 ;
- la figure 4 illustre une étape de désabonnement d'un terminal auprès d'un service de multidiffusion offert par un autre terminal selon un mode de réalisation de la présente invention ;
- la figure 5 illustre des étapes d'abonnement et de désabonnement d'une entité d'accès au service selon un mode de réalisation de la présente invention ; et
- la figure 6 illustre une architecture d'une entité d'admission et d'une entité d'accès selon un mode de réalisation de la présente invention.

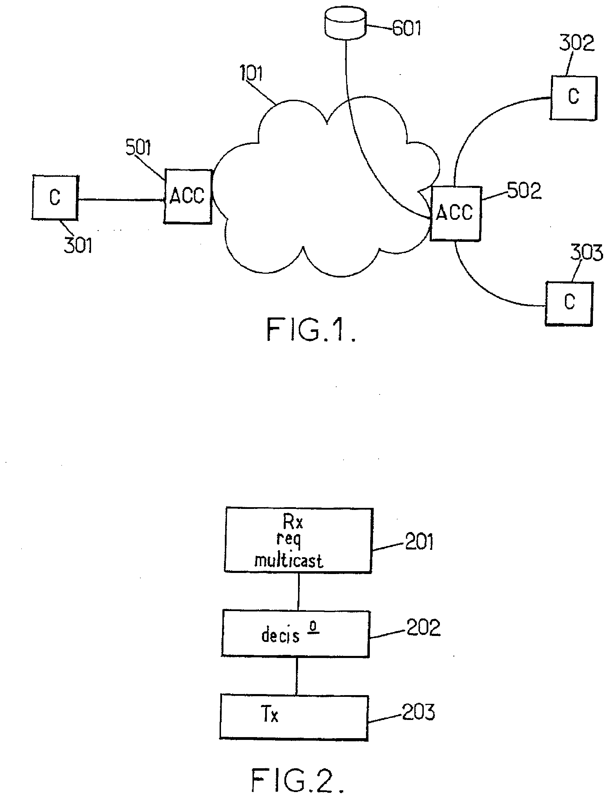

La figure 1 illustre une architecture d'un système de communication selon un mode de réalisation de la présente invention.

Un tel système de communication comprend un réseau de communication 101 qui est accessible à un premier terminal 301 via une entité d'accès 501 et à des second et troisième terminaux 302 et 303 via une entité d'accès 502. Ce système comprend en outre une entité d'admission 601 qui est en charge de décider d'accepter ou de refuser une demande d'abonnement d'un terminal selon un mode de réalisation de la présente invention.

Dans ce réseau, le terminal 301 est adapté pour offrir un service auquel peuvent s'abonner d'autres terminaux du réseau comme par exemple le terminal 302 et/ou le terminal 303.

On note $D_{up1}$, $D_{up2}$ et $D_{up3}$ les valeurs maximales de débit montant allouées respectivement aux terminaux 301, 302 et 303.

On note $D_{down1}$, $D_{down2}$ et $D_{down3}$ les valeurs de débit descendant allouées respectivement aux terminaux 301, 302 et 303. La valeur de débit descendant $D_{down}$ correspond à une valeur de débit descendant garantie.

Dans ce mode de réalisation, ces entités d'accès 501 et 502 sont distinctes et sont adaptées pour gérer le transfert des flux de paquets multicast à travers le réseau selon un protocole de transmission. Aucune limitation n'est attachée au protocole utilisé entre ces entités d'accès.

Si les entités d'accès 501 et 502 sont des routeurs IP, le protocole multicast utilisé peut par exemple être une des variantes du protocole de type PIM (pour 'Protocol Independent Multicast'), par exemple PIM-SM (pour 'Protocol Independent Multicast Sparse Mode'), décrit dans le RFC 4601. Si les entités d'accès 501 et 502 sont des noeuds relayant les paquets IP sans les router, le protocole multicast utilisé peut alors être par exemple un protocole du type IGMP (pour 'Internet Group Management Protocol') pour IPv4 (pour IP version 4) ou MLD (pour "Multicast Listener Discovery") pour IPv6 (pour IP version 6).

La figure 2 illustre les principales étapes d'un procédé d'admission d'abonnement à un service selon un mode de réalisation de la présente invention.

A une étape 201, on reçoit une requête d'abonnement du second terminal au service offert par le premier terminal.

A une étape 202, on décide d'admettre ou de refuser cet abonnement du second terminal sur la base de la valeur maximale de débit montant allouée au premier terminal $D_{up}$ et de la valeur de débit descendant allouée au second terminal $D_{down}$.

Puis, à une étape 203, on émet une réponse indiquant la décision prise à l'étape 202. Même si aucune limitation n'est attachée au type de service considéré, dans les sections suivantes le service offert dans le réseau est un service multicast ou encore service de multidiffusion. De manière générale, les termes les termes 'multidiffusion' et 'multicast' sont ici employés de manière similaire.

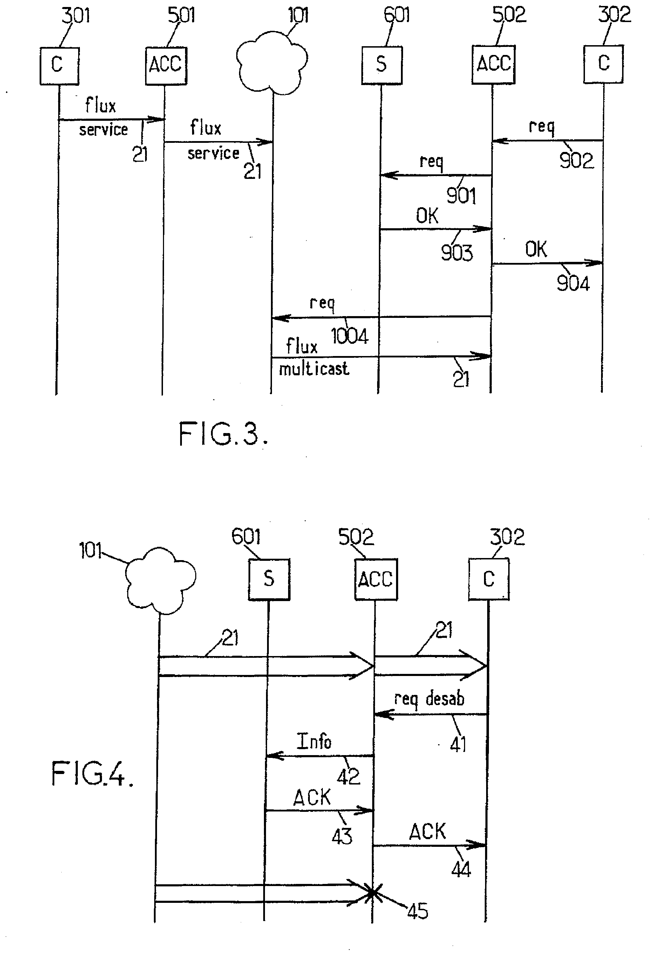

La figure 3 illustre un exemple de mise en oeuvre du procédé de gestion d'abonnement à un service selon un mode de réalisation de la présente invention dans un système tel qu'illustré en figure 1.

Le réseau de communication 101 peut être un réseau de type IP dans lequel les terminaux peuvent établir entre eux des liaisons de différents types et notamment des liaisons point à point (ou 'unicast') et des liaisons point à multipoints (ou 'multicast' ou 'multidiffusion'). En utilisant les liaisons multicast, il est aisé d'offrir dans le réseau des services de multidiffusion comme par exemple un service de diffusion de vidéo à des terminaux abonnés.

Le réseau de communication 101 permet d'établir une liaison multicast sur la base d'une adresse IP multicast.

Par la suite, les adresses unicast ou encore adresses d'envoi individuel sont notées @$_{uni}$ et les adresses multicast ou encore adresses multidiffusion sont notées @$_{multi}$.

Il est possible de prévoir qu'un premier terminal 301 offre un service de multidiffusion à d'autres terminaux du réseau. Dans ce cas, une adresse IP source unicast @$_{uni1}$ et une adresse IP multicast @$_{multi1}$ sont allouées au terminal 301. Puis, pour être abonné à ce service, un terminal s'abonne pour l'adresse multidiffusion du terminal.

Aux autres terminaux 302 et 303 sont allouées les adresses IP unicast respectives @$_{uni2}$ et @$_{uni3}$.

Dans l'exemple illustré en figure 1, l'entité d'accès 501 est en charge de gérer l'accès au réseau du terminal 301, et notamment à ce titre elle est en charge de limiter le débit montant en deçà d'une valeur maximale de débit $D_{up1}$ et de garantir le débit descendant du terminal 301 jusqu'à une valeur de débit descendant allouée à ce terminal $D_{down1}$. L'entité d'accès 502 gère l'accès au réseau des terminaux 302 et 303, et à ce titre limite le débit montant en deçà d'une valeur maximale de débit $D_{up2}$, $D_{up3}$ et de garantir le débit descendant jusqu'à une valeur de débit descendant allouée à la fois pour le terminal 302 $D_{up2}$ et pour le terminal 303 $D_{up3}$.

Ainsi, le terminal 301 dispose d'une adresse unicast @$_{uni1}$ et d'une adresse multicast @$_{mult1}$ qui lui permet d'offrir un service de multidiffusion.

Dans un mode de réalisation de la présente invention, il est prévu de prendre une décision d'admission d'un abonnement d'un terminal au service offert par le terminal 301 sur la base d'une part de la valeur maximale de débit montant allouée au terminal 301 et d'autre part de la valeur de débit descendant allouée au terminal qui souhaite s'abonner. En comparant ces deux valeurs il est possible d'éviter de manière pertinente des congestions du lien d'accès au réseau. Il est notamment possible de refuser une requête d'abonnement à un service d'un terminal à qui est allouée une valeur de débit descendant inférieure à la valeur maximale de débit montant du terminal qui est celui qui offre le service.

Dans un mode de réalisation, il est prévu de prendre la décision d'accepter ou de refuser l'abonnement à un service en prenant en outre en compte un ou plusieurs abonnements à des services précédemment acceptés pour le terminal qui est en train de requérir un nouvel abonnement. Dans ce cas, on peut avantageusement prendre une décision d'admission ou de refus de l'abonnement de manière encore plus adaptée à certaines conditions.

Dans les sections suivantes, on prend en compte les abonnements précédemment acceptés.

A cet effet, on note $D_{serv2}$ et $D_{serv3}$ les valeurs respectives de débit de service déjà autorisé respectivement pour les terminaux 302 et 303. Plus précisément, pour un terminal donné, la valeur de débit de service correspond à la somme des valeurs maximales de débit de chaque service auquel est déjà abonné le terminal considéré. Ainsi, dans le cas illustré, si le terminal 302 est déjà abonné à un service offert par le terminal 303 par exemple, la valeur de débit de service $D_{serv2}$ associée au terminal 302 peut indiquer une valeur de débit représentant ce service. On peut notamment prévoir que la valeur de débit de service $D_{serv2}$ représente dans ce cas la valeur maximale de débit montant allouée au terminal 303.

Ainsi, dans ce mode de réalisation, la décision d'accepter l'abonnement au service du terminal 301 sera effectuée en prenant avantageusement en compte les services auxquels est déjà abonné le terminal qui requiert un nouvel abonnement.

Aucune limitation n'est attachée au type de débit de service $D_{serv}$ déjà autorisé pour un terminal donné. En effet, la valeur de ce débit de service peut correspondre à tout type de service que le terminal considéré est susceptible de recevoir, que ces services soient offerts par un serveur ou encore par un terminal lui-même du réseau.

La décision d'admission d'abonnement peut être prise au niveau de n'importe quelle entité réseau qui est adaptée pour recevoir un message indiquant une requête d'abonnement d'un terminal et pour décider de l'admettre ou non en fonction de paramètres d'admission relatifs aux différents débits tels que ceux énoncés ci-dessus. Cette entité réseau est adaptée pour stocker, ou tout au moins récupérer les informations de débit sur la base desquelles elle décide d'admettre ou de refuser l'abonnement requis, selon un mode de réalisation de la présente invention. En effet, les informations de débit peuvent être stockées dans une base de données à laquelle l'entité d'admission a accès.

La décision d'admission d'abonnement peut être prise au niveau d'une entité d'admission 601. Dans ce cas, on peut prévoir que l'entité d'admission obtienne et stocke les informations suivantes en association à chaque terminal du réseau dont elle a la charge de gérer l'admission dans le réseau :

- une valeur maximale de débit montant $D_{up}$;
- une valeur de débit descendant allouée $D_{down}$; et
- une valeur de débit de service déjà allouée $D_{serv}$.

Les informations de valeur maximale de débit montant et valeur de débit descendant allouées sont par exemple obtenues en provenance d'un organe de commande des noeuds d'accès, non représenté.

Aucune limitation n'est attachée au stockage de ces informations en association à un terminal du réseau.

On peut notamment prévoir que ces informations soient stockées en association à une adresse unicast $@_{uni}$ du terminal considéré.

Dans l'architecture illustrée en figure 1, les messages émis et reçus par un terminal transitent par une entité d'accès. Ainsi, les requêtes d'abonnement à un service émises par un terminal transitent par l'entité d'accès qui a en charge la gestion de l'accès au réseau de ce terminal. Toutefois aucune limitation n'est attachée à cet aspect. En effet, quelque soit l'architecture considérée, il suffit que les terminaux puissent émettre des requêtes à destination de l'entité d'admission.

La figure 3 illustre les différents échanges de messages mis en oeuvre selon un mode de réalisation de la présente invention.

Le terminal 301 est adapté pour offrir un service multidiffusé au cours duquel il transmet depuis son adresse IP source $@_{uni1}$ à des terminaux abonnés à son adresse IP multicast $@_{multi1}$ un flux de service 21 via l'entité d'accès 501 et le réseau 101.

Ici, lorsque le terminal 302 souhaite recevoir le contenu multi-diffusé par le terminal 301, il s'abonne en émettant à destination de l'entité d'accès 502 une requête 901 d'abonnement au service multidiffusé de l'adresse IP multicast $@_{multi1}$. La requête 901 d'abonnement comprend en outre l'adresse IP unicast $@_{uni1}$ du terminal 301. Un tel service peut correspondre à un flux de service en provenance de l'adresse IP unicast $@_{uni1}$ du terminal 301.

Puis, l'entité d'accès 502 envoie une requête d'admission 902 à l'entité d'admission 601 pour lui demander de décider d'accepter ou de refuser l'abonnement requis par le terminal 302.

La requête 902 d'admission indique d'une part l'adresse IP unicast $@_{uni1}$ de la source de multidiffusion du terminal 301 et d'autre part l'adresse IP unicast $@_{uni2}$ du terminal 302 correspondant à la requête d'abonnement 901.

Sur réception de cette requête d'admission 902, l'entité d'admission 601 effectue un contrôle d'admission selon un mode de réalisation de la présente invention.

L'entité d'admission 601 stockant les valeurs de débit en fonction des adresses unicast respectives des terminaux, elle récupère en mémoire la valeur maximale du débit montant $D_{up1}$ du terminal 301 sur la base de l'adresse unicast $@_{uni1}$ indiquée dans la requête 902 d'admission et, sur la base de l'adresse unicast $@_{uni2}$ du terminal 302 indiquée dans la requête 902 d'admission également, la valeur $D_{down2}$ de débit descendant allouée au terminal 302 ainsi que la valeur $D_{serv2}$ du débit de service déjà allouée au terminal 302.

Puis, l'entité d'admission 601 additionne la valeur maximale du débit montant $D_{up1}$ allouée au terminal 301 à la valeur du débit de service déjà autorisée $D_{serv2}$ pour le terminal 302. Elle compare le résultat de cette addition avec la valeur du débit descendant $D_{down2}$ allouée au terminal 302, suite à cette comparaison, elle décide d'accepter ou non cet abonnement pour le terminal 302.

Cette étape de comparaison peut par exemple consister à comparer directement ces deux valeurs comme suit :

$$(D_{up1} + D_{serv2}) < D_{down2}$$

Si cette inégalité est vérifiée, l'entité d'admission peut accepter l'abonnement et le refuser dans le cas contraire.

On peut également envisager d'effectuer une comparaison un peu plus complexe basée par exemple sur l'inégalité suivante :

$$(D_{up1} + D_{serv2} + D_{sec}) < D_{down2}$$

où $D_{sec}$ est une valeur constante qui est une marge de sécurité permettant de prendre en compte de manière grossière d'éventuelles autres réceptions de données destinées au terminal 302, sans toutefois en connaître la quantité.

Aucune limitation n'est attachée à la comparaison mise en oeuvre à ce niveau sur la base de ces trois types de débit.

Puis, si l'abonnement est refusé, l'entité d'admission 601 retourne à l'entité d'accès 502 une réponse négative à sa demande d'admission 902 et l'entité d'accès 502 retourne au terminal 302 une réponse négative à sa requête d'abonnement 901 (non illustrée).

Dans le cas où l'abonnement est accepté sur la base d'une comparaison des valeurs de débit énoncées ci-dessus, l'entité d'admission 601 met à jour la valeur de débit de service associée au terminal 302 en ajoutant à la précédente valeur la valeur maximale de débit montant du terminal 301. Puis, elle retourne à l'entité d'accès 502 une réponse 903 positive à sa requête d'admission 902.

On peut prévoir que, optionnellement, la valeur maximale du débit montant $D_{up1}$ allouée au terminal 301 soit indiquée dans la réponse positive d'admission 903. Ainsi, non seulement l'entité d'accès 502 mais également le terminal 302 peuvent en être informés.

L'entité d'accès 502 retourne ensuite au terminal 302 une réponse positive 904 à sa requête d'abonnement 902. Cette réponse 904 peut indiquer le débit montant maximum $D_{up1}$ allouée au terminal 301.

Le terminal 302 ayant connaissance du débit montant maximum $D_{up1}$ alloué au terminal 301 pour le service associé, il peut avantageusement se désabonner de ce service s'il estime que le débit associé est trop important, au regard du débit descendant garanti sur son interface d'accès et du débit associé aux autres services auquel il s'est abonné.

A l'issue de ces échanges de messages, soit l'entité d'accès reçoit déjà le flux de service 21, par exemple parce qu'un autre terminal dont elle a la charge est déjà abonné à ce service, soit l'entité d'accès ne reçoit pas encore ce flux de service 21.

Dans le premier cas, l'entité d'accès est autorisée à relayer vers le terminal 302 le flux de service 21 multicast reçu en provenance de l'adresse $@_{uni1}$ du terminal 301.

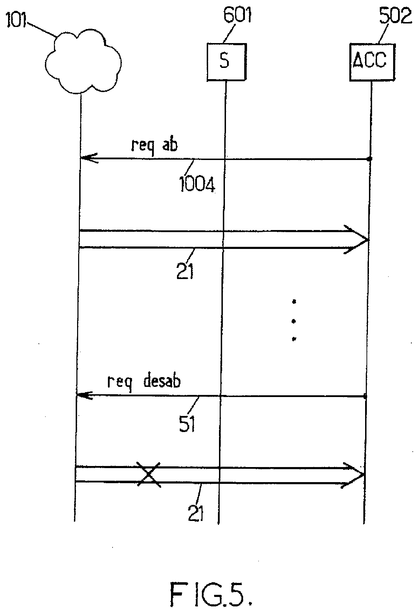

Dans le second cas, c'est-à-dire lorsque le terminal 302 est le premier terminal à s'abonner au service de multidiffusion offert par le terminal 301, l'entité d'accès 502 émet à destination du réseau 101 une requête 1004 d'abonnement pour le service offert par le terminal 301. Suite à cette requête d'abonnement, le flux de service multidiffusion 21 émis par le terminal 301 est transmis jusqu'à l'entité d'accès 502. Ces étapes sont plus précisément décrites en relation avec la figure 5.

La figure 4 illustre une étape de désabonnement du terminal 302 auprès du service de multidiffusion offert par le terminal 301.

Lorsque le terminal 302 souhaite ne plus être abonné au service offert par le terminal 301, c'est-à-dire ici lorsqu'il ne souhaite plus recevoir le flux de service 21 depuis la source d'adresse $@_{uni1}$ du terminal 301, il envoie à destination de l'entité d'accès 502 une requête 41 de désabonnement à l'adresse IP multicast $@_{multi1}$ pour le flux de service 21 en provenance de l'adresse IP unicast $@_{uni1}$.

Sur réception de cette requête de désabonnement 41, l'entité d'accès 502 relaie la requête de désabonnement sous la forme d'un message d'information 42 à l'entité d'admission 601 pour l'informer de la demande de désabonnement du terminal 302 au service de multidiffusion offert par le terminal 301.

Le message d'information 42 indique l'adresse IP unicast $@_{uni1}$ de la source multicast du terminal 301 et l'adresse IP unicast $@_{uni2}$ du terminal 302 qui a émis la requête de désabonnement 41.

Sur réception du message d'information 42, l'entité d'admission 601 soustrait la valeur maximale du débit montant $D_{up1}$ du terminal 301 à la valeur de débit de service $D_{serv2}$ déjà autorisé pour le terminal 302.

Puis, l'entité d'admission retourne à l'entité d'accès 502 une réponse d'acquittement 43 au message d'information 42. L'entité d'accès 502 retourne au terminal 302 une réponse positive 44 à sa demande de désabonnement 41 et cesse de relayer 45 vers le terminal 302 les paquets IP du flux de service 21 en provenance du terminal 301.

La figure 5 illustre des étapes d'abonnement et de désabonnement d'une entité d'accès au service selon un mode de réalisation de la présente invention.

Lorsque, parmi les terminaux dont l'entité d'accès 502 a la charge, le premier reçoit une décision positive d'acceptation d'abonnement de l'entité d'admission, cette entité d'accès requiert la réception du flux de service correspondant 21. A cet effet, elle émet une requête d'abonnement 1004 à destination du réseau 101 de multidiffusion. Puis, suite à cette requête elle reçoit le flux de service 21.

Ensuite, lorsque, parmi les terminaux dont l'entité d'accès 502 a la charge, le dernier terminal se désabonne du service considéré, l'entité d'accès 502 émet alors une requête de désabonnement 51 au service à destination du réseau. Puis, suite à ce message, l'entité d'accès 502 cesse de recevoir le flux de service 21.

Il est possible que les valeurs maximales de débit montant allouées aux terminaux du réseau évoluent dans le temps. Dans ce cas, il peut être avantageux de prendre en compte ces évolutions.

Dans un mode de réalisation de la présente invention, lorsque la valeur maximale du débit montant allouée au terminal 301 diminue, l'entité d'admission 601 soustrait à la valeur de débit de service déjà autorisé $D_{serv}$ de chaque terminal du réseau dont l'adresse IP source $@_{uni}$ a été associée à l'adresse IP source $@_{uni1}$ du terminal 301 la différence entre la précédente valeur maximale du débit montant et la nouvelle valeur maximale du débit montant allouée au terminal 301.

On peut ainsi avantageusement disposer d'un contrôle d'admission évolutif dans le temps.

Dans un mode de réalisation de la présente invention, l'entité d'admission 601 détermine l'entité d'accès ou les entités d'accès qui ont la charge des terminaux abonnés au service offert par le terminal 301. Puis, cette information est relayée par les entités d'accès correspondantes et les terminaux abonnés sont informés de ces changements de valeur maximale de débit montant.

L'entité d'admission 601 peut récupérer leurs adresses respectives $@_{uni}$ qui sont associées à l'adresse $@_{uni1}$ du terminal 301.

Dans un mode de réalisation, lorsque la valeur maximale de débit montant $D_{up1}$ allouée au terminal 301 augmente, l'entité d'admission 601 additionne, à la valeur de débit de service déjà autorisé $D_{serv}$ pour chaque terminal dont l'adresse IP source $@_{uni}$ a été associée à l'adresse IP source $@_{uni1}$ du terminal 301, la différence entre la nouvelle valeur maximale de débit montant et la précédente valeur maximale de débit montant allouée au terminal 301.

Ainsi, au niveau de l'entité d'admission, on peut appliquer l'équation suivante :

$$D_{servi}(t+1) = D_{servi}(t) + \Delta(t+1,t)$$

où $D_{servi}(t)$ représente la valeur de débit de service en fonction du temps pour un terminal i ; et
où $\Delta(t+1,t)$ représente la différence entre la valeur maximale de débit montant à l'instant t+1 et la précédente valeur maximale de débit montant à l'instant t allouée au terminal offrant le service considéré.

Dans un mode de réalisation de la présente invention, l'entité d'admission 601 envoie la nouvelle valeur maximale de débit montant allouée au terminal 301 à l'entité d'accès 502 ou aux entités d'accès en charge de gérer l'accès des terminaux qui sont abonnés au service offert par ce terminal 301. L'entité d'admission 601 peut récupérer leurs adresses respectives $@_{uni}$ qui sont associées à l'adresse $@_{uni1}$ du terminal 301.

On peut prévoir que l'entité d'accès 502 ou les entités d'accès correspondantes relaient cette information à destination de tous les terminaux abonnés au flux de service multicast émis par le terminal 301.

Afin de rendre ce système adapté aux différentes évolutions, on peut prévoir que l'entité d'admission 601 effectue des contrôles d'admission au cours du temps en fonction des évolutions dans le temps des valeurs maximales de débit montant allouées au terminal offrant le service.

Dans ce contexte là, on peut notamment prévoir que lorsque cette valeur maximale augmente, l'entité d'admission contrôle pour chaque terminal abonné si les critères d'admission sont toujours vérifiés. Ainsi, dans le cas où l'inéquation suivante n'est pas vérifiée :

$$(D_{up1} + D_{serv2} + D_{seo}) < D_{down2}$$

où $D_{up1}$ correspond à la dernière valeur reçue,
alors l'entité d'admission peut décider d'envoyer une demande de rejet d'abonnement au service multicast offert par le terminal 301 à destination de l'entité d'accès ou des entités correspondantes ayant la charge des terminaux abonnés et pour lesquels l'inégalité ci-dessus n'est plus vérifiée.

Il peut être avantageux d'attendre une période de temps déterminée par exemple par configuration entre le moment où l'entité d'admission est informée d'un changement et le moment où elle en informe les terminaux abonnés, afin d'éviter une instabilité liée à trop de modifications de ce type dans le réseau.

L'entité d'accès 502 peut ensuite la relayer vers tous les terminaux abonnés au service concerné.

Dans un mode de réalisation de la présente invention, lorsque la valeur de débit descendant $D_{down2}$ allouée à un terminal abonné, par exemple au terminal 302, diminue et devient inférieure à la valeur de débit de service multicast déjà autorisée $D_{serv2}$, l'entité d'admission 601 envoie à l'entité d'accès 502 en charge de ce terminal 302, une demande de rejet d'abonnement au service multicast offert.

Il peut être avantageux d'attendre une période de temps déterminée par exemple par configuration entre le moment où l'entité d'admission est informée d'un changement et le moment où elle en informe les terminaux abonnés, afin d'éviter une instabilité liée à trop de modifications de ce type dans le réseau.

L'entité d'accès 502 peut ensuite relayer cette information aux terminaux concernés abonnés au service multicast du terminal 301.

Il est possible que le terminal 302 soit déjà abonné à un ou plusieurs autres services. Dans ce cas, il se peut que malgré le désabonnement au service offert par le terminal 301, la valeur de débit de service allouée au terminal 302 soit encore supérieure à la valeur de débit descendant qui lui est allouée. On peut alors prévoir que, si cette situation perdure après un temps d'attente défini par défaut, et pouvant être configuré par exemple, alors l'entité d'admission 601 envoie à l'entité d'accès 502 une demande de rejet d'abonnement au service multicast offert par cet autre terminal.

Puis, l'entité d'accès 502 peut relayer cette information au terminal concerné 302.

Dans le cas où, pour un terminal abonné à plusieurs services multicast, la valeur de débit de service est supérieure à la valeur de débit descendant, l'entité d'admission 601 peut avantageusement choisir, parmi les services répertoriés auxquels le terminal considéré est abonné, celui qui est offert par le terminal ayant la plus grande valeur de débit montant allouée.

Quel que soit le protocole utilisé par des entités d'accès 501 et 502 pour commander le transfert du flux de service multicast 21 de l'une vers l'autre, les étapes suivantes peuvent être mises en oeuvre.

Tant que l'entité d'accès 502 ne reçoit pas de réponse positive à la première requête d'abonnement émise pour un terminal dont elle a la charge relativement au service offert par le terminal 301, elle ne relaie pas au réseau 101 la requête 901 d'abonnement à l'adresse IP multicast $@_{uni1}$ pour les paquets en provenance de l'adresse IP unicast $@_{multi1}$.

Lorsque l'entité d'accès 502 reçoit la première réponse positive à une demande d'admission d'abonnement pour un terminal dont elle a la charge, elle relaie au réseau 101 selon un protocole multicast adapté la demande d'abonnement afin que le réseau 101 envoie le flux de service 21 émis par le terminal 301 vers l'adresse multicast $@_{multi1}$.

L'entité d'accès 502 ne relaie pas la requête de désabonnement à l'adresse IP multicast $@_{multi}$ pour les

paquets en provenance de l'adresse IP unicast, sauf après qu'elle ait reçu la dernière réponse positive à sa demande d'information pour les terminaux abonnés dont elle a la charge.

Alors, l'entité d'accès 502 relaie au réseau de transport 101 la demande pour que le réseau 101 cesse de lui relayer les paquets multicast du flux de service 21 émis par le terminal 301 vers l'adresse multicast @$_{multi1}$.

Dans le cas d'un service non multidiffusion, on peut prévoir que la requête d'abonnement émise par le terminal récepteur 302 indique l'adresse IP unicast @$_{uni1}$ du terminal 301 offrant un service point à point.

Dans un mode de réalisation de la présente invention, le procédé diffère du cas d'un service multidiffusion pour les cas suivants :

- lorsque l'entité d'admission 601 accepte l'abonnement à ce service, et tant que l'abonnement à ce service est effectif, l'entité d'accès 502 enregistre l'adresse IP unicast @$_{uni1}$ du terminal 301 de sorte de relayer vers le terminal 302 tous les paquets en provenance du terminal 301 en priorité,
- lorsque l'entité d'admission 601 refuse l'abonnement à ce service, l'entité d'accès 502 ne relaie vers le terminal 302 les paquets unicast en provenance du terminal 301 que si le débit descendant sur l'interface d'accès vers le terminal 302 est inférieur à un débit maximum allouée à cette interface, laissant avantageusement la priorité aux paquets correspondant aux services qui ont été acceptés par l'entité d'admission 601.

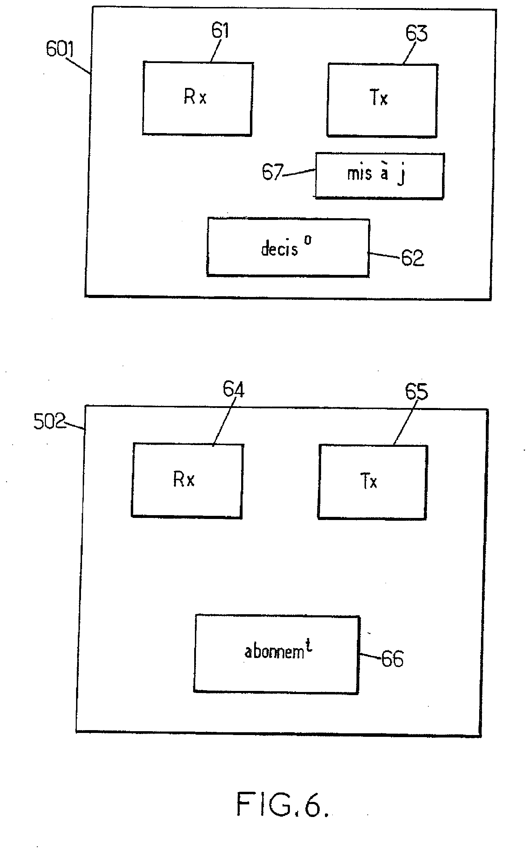

La figure 6 illustre une architecture d'entité d'admission 601 et d'une entité d'accès selon un mode de réalisation de la présente invention. L'entité d'admission 601 comprend :

- une unité d'obtention 60 adaptée pour obtenir une valeur maximale de débit montant et une valeur de débit descendant respectivement allouées aux premier et second terminaux ;
- une unité de réception 61 adaptée pour recevoir une requête d'admission pour un abonnement du second terminal au service offert par le premier terminal ;
- une unité de décision 62 adaptée pour prendre une décision d'admission ou de refus d'abonnement du second terminal sur la base de la valeur maximale de débit montant allouée au premier terminal et de la valeur de débit descendant allouée au second terminal ; et
- une unité de transmission 63 adaptée pour émettre une réponse indiquant la décision.

Dans un mode de réalisation, au moins un autre service étant offert dans le réseau par au moins un autre terminal 303 auquel est allouée une valeur maximale de débit montant, le second terminal est déjà abonné audit autre service ;

la valeur maximale de débit montant allouée audit autre terminal étant mémorisée en tant que valeur de débit de service associée au second terminal;

l'unité de décision 62 prenant une décision sur la base en outre de ladite valeur de débit de service ;

l'entité d'admission comprenant en outre une unité de mise à jour 67 adaptée pour mettre à jour la valeur de débit de service associée au second terminal en y ajoutant la valeur maximale de débit montant allouée au premier terminal si l'abonnement requis est admis.

L'entité d'accès 502 comprend :

- une unité de réception 64 adaptée pour recevoir une requête d'abonnement 901 du second terminal au service offert par le premier terminal ;
- une unité de transmission 65 adaptée pour transmettre une requête d'admission pour un abonnement à une entité d'admission 601 et pour transmettre les informations numériques reçues au second terminal si l'abonnement est admis par l'entité d'admission ; et
- une unité d'abonnement 66 adaptée pour requérir au réseau la réception des informations numériques si elles ne sont pas déjà reçues.

Cette invention peut être réalisée en mettant en oeuvre le protocole IPv4 tel que défini dans le RFC 791 (pour 'Request For Comment') ou bien le protocole IPv6 dont la spécification peut être trouvée dans le RFC 2460.

Dans le cas où le protocole IPv4 est utilisé, le protocole d'abonnement à une adresse IP multicast pourra être le protocole IGMP par exemple dans sa version V3, définie dans le RFC 3376.

Dans le cas où le protocole IPv6 est utilisé, le protocole d'abonnement à une adresse IP multicast pourra être le protocole MLD (pour 'Multicast Listener Discovery') défini par exemple dans le RFC 3810.

La présente invention peut s'appliquer aussi bien aux réseaux fixes (les entités d'accès peuvent alors être par exemple de DSLAM (pour 'Digital Subscriber Line Access', ou des MSAN (pour 'Multiservice access node'), qu'aux réseaux mobiles (les entités d'accès peuvent alors être par exemple des RNC (pour 'Radio Network Controller'), ou des eNodeB (pour 'evolved NodeB'), ou bien encore des ePDG (pour 'evolved Packet Data Gateway').

## Revendications

1. Procédé de gestion d'abonnement à un service offert dans un réseau de communication (101) par un premier terminal (301), ledit premier terminal étant un terminal source ;

   ledit réseau de communication comprenant un second terminal (302) et ledit service comprenant une transmission d'informations numériques ;

   dans lequel une entité d'admission obtient préalablement une valeur maximale de débit montant ($D_{up1}$, $D_{up2}$) et une valeur de débit descendant ($D_{down1}$, $D_{down2}$) respectivement allouées aux premier et second terminaux ;

ledit procédé comprenant les étapes suivantes au niveau de l'entité d'admission (601) du réseau :

/1/ recevoir (201) une requête d'admission pour un abonnement (902) du second terminal au service offert par le premier terminal ;

/2/ prendre (202) une décision d'admission ou de refus d'abonnement du second terminal sur la base de la valeur maximale de débit montant allouée au premier terminal et de la valeur de débit descendant allouée au second terminal ; et

/3/ émettre (203) une réponse indiquant ladite décision,

dans lequel, au moins un autre service étant offert dans le réseau par au moins un autre terminal (303) auquel est allouée une valeur maximale de débit montant, le second terminal est déjà abonné audit autre service ;

dans lequel la valeur maximale de débit montant allouée audit autre terminal est mémorisée en tant que valeur de débit de service associée au second terminal ;

dans lequel l'étape /2/ est effectuée en outre sur la base de ladite valeur de débit de service ; et dans lequel, si l'abonnement requis est admis, la valeur maximale de débit montant allouée au premier terminal est additionnée à la valeur de débit de service associée au second terminal.

2.  Procédé de gestion d'abonnement selon la revendication 1, comprenant en outre les étapes suivantes :

/a/ recevoir une information relative à un désabonnement (42) du second terminal au service offert par le premier terminal ;

/b/ mettre à jour la valeur de débit de service associée au second terminal en soustrayant la valeur maximale de débit montant allouée au premier terminal ;

/c/ acquitter la réception de cette information relative au désabonnement (43).

3.  Procédé de gestion d'abonnement selon la revendication 1, dans lequel, lorsque la valeur maximale de débit montant allouée au premier terminal est augmentée, les étapes /2/ et /3/ sont à nouveau effectuées.

4.  Procédé de gestion d'abonnement selon la revendication 1, dans lequel, lorsque la valeur de débit descendant allouée au second terminal est réduite, les étapes /2/ et /3/ sont à nouveau effectuées.

5.  Procédé de gestion d'abonnement selon la revendication 1, dans lequel une première adresse d'envoi individuel ($@_{uni1}$) et une seconde adresse de multidiffusion ($@_{multi1}$) étant allouées au premier terminal (301), et une troisième adresse d'envoi individuel ($@_{uni2}$) étant allouée au second terminal (302) ;

dans lequel la valeur maximale de débit montant allouée au premier terminal est stockée en association avec la première adresse d'envoi individuel et la valeur de débit descendant allouée au second terminal est stockée en association avec la troisième adresse d'envoi individuel ; et

dans lequel ladite requête d'admission (902) indique la première adresse relative au premier terminal et la troisième adresse relative au second terminal.

6.  Procédé de gestion d'abonnement selon la revendication 1,

le second terminal (302) ayant accès audit réseau via une entité d'accès (502) ;

ledit procédé comprenant les étapes suivantes au niveau de ladite entité d'accès :

/i/ recevoir une requête d'abonnement (901) du second terminal au service offert par le premier terminal ;

/ii/ transmettre une requête d'admission pour ledit abonnement à une entité d'admission (601) ; et

/iii/ sur réception d'une réponse indiquant l'admission du second terminal au service, transmettre les informations numériques reçues au second terminal ;

dans lequel à l'étape /ii/, si les informations numériques ne sont pas déjà reçues, les étapes suivantes sont effectuées :

- émettre une requête d'abonnement au service à destination du réseau ; et
- recevoir les informations numériques.

7.  Procédé de gestion d'abonnement selon la revendication 6, comprenant en outre les étapes suivantes :

- recevoir une requête de désabonnement (41) du second terminal au service offert par le premier terminal ;
- transmettre une information relative audit désabonnement à l'entité d'admission ; et
- stopper la transmission des informations numériques à destination du second terminal ;

dans lequel, lorsque le second terminal est le dernier terminal abonné au service pour l'entité d'accès, ladite entité d'accès transmet la requête de désabonnement au réseau.

8. Entité d'admission (601) adaptée pour gérer un abonnement à un service offert dans un réseau de communication (101) par un premier terminal (301) ; ledit réseau de communication comprenant un second terminal (302) ;ledit service comprenant une transmission d'informations numériques ; ladite entité d'admission comprenant :

   - une unité d'obtention (60) adaptée pour obtenir une valeur maximale de débit montant ($D_{up1}$) et une valeur de débit descendant ($D_{down2}$) respectivement allouées au premier terminal et au second terminal ;
   - une unité de réception (61) adaptée pour recevoir une requête d'admission (901) pour un abonnement du second terminal au service offert par le premier terminal ;
   - une unité de décision (62) adaptée pour prendre une décision d'admission ou de refus d'abonnement du second terminal sur la base de la valeur maximale de débit montant allouée au premier terminal et de la valeur de débit descendant allouée au second terminal ; et
   - une unité de transmission (63) adaptée pour émettre une réponse indiquant ladite décision,

   le dit service comprenant au moins un autre service offert dans le réseau par au moins un autre terminal (303) auquel est allouée une valeur maximale de débit montant, le second terminal est déjà abonné audit autre service ;
   la valeur maximale de débit montant allouée audit autre terminal étant mémorisée en tant que valeur de débit de service associée au second terminal ;
   la prise de décision d'admission ou de refus d'abonnement du second terminal sur la base de la valeur maximale de débit montant allouée au premier terminal et de la valeur de débit descendant allouée au second terminal étant effectuée en outre sur la base de ladite valeur de débit de service ; et
   si l'abonnement requis est admis, la valeur maximale de débit montant allouée au premier terminal étant additionnée à la valeur de débit de service associée au second terminal.

9. Entité d'admission (601) selon la revendication 8, dans laquelle,
   au moins un autre service étant offert dans le réseau par au moins un autre terminal (303) auquel est allouée une valeur maximale de débit montant, le second terminal est déjà abonné audit autre service ;
   la valeur maximale de débit montant allouée audit autre terminal étant mémorisée en tant que valeur de débit de service associée au second terminal;
   l'unité de décision prenant une décision sur la base en outre de ladite valeur de débit de service ; l'entité d'admission comprenant en outre une unité de mise à jour adaptée pour mettre à jour la valeur de débit de service associée au second terminal en y ajoutant la valeur maximale de débit montant allouée au premier terminal si l'abonnement requis est admis.

10. Système de gestion d'abonnement à un service offert dans un réseau de communication (101) par un premier terminal (301) ;
    ledit réseau de communication comprenant un second terminal (302) et ledit service comprenant une transmission d'informations numériques ;
    ledit système comprenant une entité d'admission (601) selon la revendication 9 et une entité d'accès (502) comprenant :

    - une unité de réception (64) adaptée pour recevoir une requête d'abonnement (901) du second terminal au service offert par le premier terminal ;
    - une unité de transmission (65) adaptée pour transmettre une requête d'admission pour un abonnement à une entité d'admission (601) et pour transmettre les informations numériques reçues au second terminal si l'abonnement est admis par l'entité d'admission ; et
    - une unité d'abonnement (66) adaptée pour requérir au réseau la réception des informations numériques si elles ne sont pas déjà reçues.

11. Système de gestion d'abonnement selon la revendication 10, dans lequel l'entité d'accès est adaptée pour limiter le débit montant du premier terminal en-deçà de la valeur maximale de débit montant qui lui est allouée.

12. Programme d'ordinateur comportant des instructions pour la mise en oeuvre du procédé selon la revendication 1, lorsque ce programme est exécuté par un processeur.

13. Support d'enregistrement sur lequel est stocké le programme d'ordinateur selon la revendication 12.

**Patentansprüche**

1. Verfahren zur Verwaltung einer Anmeldung bei einem Dienst, der in einem Kommunikationsnetz (101) von einem ersten Endgerät (301) angeboten wird, wobei das erste Endgerät ein Quellenendgerät ist;
   wobei das Kommunikationsnetz ein zweites Endgerät (302) umfasst und der Dienst eine Übertragung von digitalen Informationen umfasst;
   wobei eine Annahmeentität zuvor einen maximalen Wert der Uploadgeschwindigkeit ($D_{up1}$, $D_{up2}$) und einen Wert der Downloadgeschwindigkeit ($D_{down1}$,

$D_{down2}$) , die dem ersten bzw. zweiten Endgerät zugewiesen sind, gewinnt;

wobei das Verfahren die folgenden Schritte an der Annahmeentität (601) des Netzes umfasst:

/1/ Empfangen (201) einer Annahmeanforderung für eine Anmeldung (902) des zweiten Endgerätes bei dem Dienst, der von dem ersten Endgerät angeboten wird;

/2/ Treffen (202) einer Entscheidung über die Annahme oder Ablehnung der Anmeldung des zweiten Endgerätes auf der Basis des maximalen Wertes der Uploadgeschwindigkeit, der dem ersten Endgerät zugewiesen ist, und des Wertes der Downloadgeschwindigkeit, der dem zweiten Endgerät zugewiesen ist; und

/3/ Senden (203) einer Antwort, welche die Entscheidung angibt,

wobei wenigstens ein weiterer Dienst in dem Netz von wenigstens einem weiteren Endgerät (303) angeboten wird, dem ein maximaler Wert der Uploadgeschwindigkeit zugewiesen ist, und das zweite Endgerät bereits bei diesem weiteren Dienst angemeldet ist;

wobei der maximale Wert der Uploadgeschwindigkeit, der dem weiteren Endgerät zugewiesen ist, als Wert der Dienstgeschwindigkeit gespeichert ist, der dem zweiten Endgerät zugeordnet ist;

wobei Schritt /2/ außerdem auf der Basis des Wertes der Dienstgeschwindigkeit ausgeführt wird; und

wobei, falls die angeforderte Anmeldung angenommen wird, der maximale Wert der Uploadgeschwindigkeit, der dem ersten Endgerät zugewiesen ist, zu dem Wert der Dienstgeschwindigkeit addiert wird, der dem zweiten Endgerät zugeordnet ist.

2. Verfahren zur Verwaltung einer Anmeldung nach Anspruch 1, welches außerdem die folgenden Schritte umfasst:

/a/ Empfangen einer Information, welche eine Abmeldung (42) des zweiten Endgerätes von dem Dienst betrifft, der von dem ersten Endgerät angeboten wird;

/b/ Aktualisieren des Wertes der Dienstgeschwindigkeit, der dem zweiten Endgerät zugeordnet ist, durch Subtrahieren des maximalen Wertes der Uploadgeschwindigkeit, der dem ersten Endgerät zugewiesen ist;

/c/ Quittieren des Empfangs dieser Information betreffs der Abmeldung (43).

3. Verfahren zur Verwaltung einer Anmeldung nach Anspruch 1, wobei, wenn der maximale Wert der Uploadgeschwindigkeit, der dem ersten Endgerät zugewiesen ist, erhöht wird, die Schritte /2/ und /3/ erneut ausgeführt werden.

4. Verfahren zur Verwaltung einer Anmeldung nach Anspruch 1, wobei, wenn der Wert der Downloadgeschwindigkeit, der dem zweiten Endgerät zugewiesen ist, verringert wird, die Schritte /2/ und /3/ erneut ausgeführt werden.

5. Verfahren zur Verwaltung einer Anmeldung nach Anspruch 1, wobei eine erste Unicast-Adresse ($@_{uni1}$) und eine zweite Multicast-Adresse ($@_{multi1}$) dem ersten Endgerät (301) zugewiesen sind und eine dritte Unicast-Adresse ($@_{uni2}$) dem zweiten Endgerät (302) zugewiesen ist;

wobei der maximale Wert der Uploadgeschwindigkeit, der dem ersten Endgerät zugewiesen ist, in Verbindung mit der ersten Unicast-Adresse gespeichert wird und der Wert der Downloadgeschwindigkeit, der dem zweiten Endgerät zugewiesen ist, in Verbindung mit der dritten Unicast-Adresse gespeichert wird; und

wobei die Annahmeanforderung (902) die erste Adresse in Bezug auf das erste Endgerät und die dritte Adresse in Bezug auf das zweite Endgerät angibt.

6. Verfahren zur Verwaltung einer Anmeldung nach Anspruch 1,

wobei das zweite Endgerät (302) über eine Zugangsentität (502) Zugang zu dem Netz hat;

wobei das Verfahren die folgenden Schritte an der Zugangsentität umfasst:

/i/ Empfangen einer Anforderung zur Anmeldung (901) des zweiten Endgerätes bei dem Dienst, der von dem ersten Endgerät angeboten wird;

/ii/ Übertragen einer Annahmeanforderung für die Anmeldung zu einer Annahmeentität (601); und

/iii/ bei Empfang einer Antwort, welche die Annahme des zweiten Endgerätes bei dem Dienst angibt, Senden der empfangenen digitalen Informationen an das zweite Endgerät;

wobei in Schritt /ii/, falls die digitalen Informationen nicht bereits empfangen wurden, die folgenden Schritte ausgeführt werden:

- Senden einer Anforderung zur Anmeldung bei dem Dienst an das Netz; und
- Empfangen der digitalen Informationen.

7. Verfahren zur Verwaltung einer Anmeldung nach Anspruch 6, welches außerdem die folgenden Schritte umfasst:

- Empfangen einer Anforderung zur Abmeldung (41) des zweiten Endgerätes von dem Dienst, der von dem ersten Endgerät angeboten wird;

- Übertragen einer Information betreffs der Abmeldung zu der Annahmeentität; und
- Stoppen der Übertragung der digitalen Informationen zu dem zweiten Endgerät;

wobei, wenn das zweite Endgerät für die Zugangsentität das letzte bei dem Dienst angemeldete Endgerät ist, die Zugangsentität die Abmeldungsanforderung zum Netz überträgt.

8. Annahmeentität (601), welche dafür ausgelegt ist, eine Anmeldung bei einem Dienst zu verwalten, der in einem Kommunikationsnetz (101) von einem ersten Endgerät (301) angeboten wird;
   wobei das Kommunikationsnetz ein zweites Endgerät (302) umfasst; wobei der Dienst eine Übertragung von digitalen Informationen umfasst;
   wobei die Annahmeentität umfasst:

   - eine Gewinnungseinheit (60), die dafür ausgelegt ist, einen maximalen Wert der Uploadgeschwindigkeit ($D_{up1}$) und einen Wert der Downloadgeschwindigkeit ($D_{down2}$), die dem ersten Endgerät bzw. zweiten Endgerät zugewiesen sind, zu gewinnen;
   - eine Empfangseinheit (61), die dafür ausgelegt ist, eine Annahmeanforderung (901) für eine Anmeldung des zweiten Endgerätes bei dem Dienst, der von dem ersten Endgerät angeboten wird, zu empfangen;
   - eine Entscheidungseinheit (62), die dafür ausgelegt ist, eine Entscheidung über die Annahme oder Ablehnung der Anmeldung des zweiten Endgerätes auf der Basis des maximalen Wertes der Uploadgeschwindigkeit, der dem ersten Endgerät zugewiesen ist, und des Wertes der Downloadgeschwindigkeit, der dem zweiten Endgerät zugewiesen ist, zu treffen; und
   - eine Übertragungseinheit (63), die dafür ausgelegt ist, eine Antwort zu senden, welche die Entscheidung angibt,

   wobei der Dienst wenigstens einen weiteren Dienst umfasst, der in dem Netz von wenigstens einem weiteren Endgerät (303) angeboten wird, dem ein maximaler Wert der Uploadgeschwindigkeit zugewiesen ist, und das zweite Endgerät bereits bei diesem weiteren Dienst angemeldet ist;
   wobei der maximale Wert der Uploadgeschwindigkeit, der dem weiteren Endgerät zugewiesen ist, als Wert der Dienstgeschwindigkeit gespeichert ist, der dem zweiten Endgerät zugeordnet ist;
   wobei das Treffen einer Entscheidung über die Annahme oder Ablehnung der Anmeldung des zweiten Endgerätes auf der Basis des maximalen Wertes der Uploadgeschwindigkeit, der dem ersten Endgerät zugewiesen ist, und des Wertes der Downloadgeschwindigkeit, der dem zweiten Endgerät zugewiesen ist, außerdem auf der Basis des Wertes der Dienstgeschwindigkeit durchgeführt wird; und wobei, falls die angeforderte Anmeldung angenommen wird, der maximale Wert der Uploadgeschwindigkeit, der dem ersten Endgerät zugewiesen ist, zu dem Wert der Dienstgeschwindigkeit addiert wird, der dem zweiten Endgerät zugeordnet ist.

9. Annahmeentität (601) nach Anspruch 8, wobei wenigstens ein weiterer Dienst in dem Netz von wenigstens einem weiteren Endgerät (303) angeboten wird, dem ein maximaler Wert der Uploadgeschwindigkeit zugewiesen ist, und das zweite Endgerät bereits bei diesem weiteren Dienst angemeldet ist;
   der maximale Wert der Uploadgeschwindigkeit, der dem weiteren Endgerät zugewiesen ist, als Wert der Dienstgeschwindigkeit gespeichert ist, der dem zweiten Endgerät zugeordnet ist;
   die Entscheidungseinheit eine Entscheidung außerdem auf der Basis dieses Wertes der Dienstgeschwindigkeit trifft;
   die Annahmeentität außerdem eine Aktualisierungseinheit umfasst, die dafür ausgelegt ist, den Wert der Dienstgeschwindigkeit, der dem zweiten Endgerät zugeordnet ist, zu aktualisieren, indem sie den maximalen Wert der Uploadgeschwindigkeit, der dem ersten Endgerät zugewiesen ist, zu ihm hinzufügt, falls die angeforderte Anmeldung angenommen wird.

10. System zur Verwaltung einer Anmeldung bei einem Dienst, der in einem Kommunikationsnetz (101) von einem ersten Endgerät (301) angeboten wird;
    wobei das Kommunikationsnetz ein zweites Endgerät (302) umfasst und der Dienst eine Übertragung von digitalen Informationen umfasst;
    wobei das System eine Annahmeentität (601) nach Anspruch 9 und eine Zugangsentität (502) umfasst, welche umfasst:

    - eine Empfangseinheit (64), die dafür ausgelegt ist, eine Anforderung zur Anmeldung (901) des zweiten Endgerätes bei dem Dienst, der von dem ersten Endgerät angeboten wird, zu empfangen;
    - eine Übertragungseinheit (65), die dafür ausgelegt ist, eine Annahmeanforderung für eine Anmeldung zu einer Annahmeentität (601) zu übertragen und die empfangenen digitalen Informationen zu dem zweiten Endgerät zu übertragen, falls die Anmeldung von der Annahmeentität angenommen wird; und
    - eine Anmeldungseinheit (66), die dafür ausgelegt ist, beim Netz den Empfang der digitalen Informationen anzufordern, falls sie nicht bereits empfangen wurden.

11. System zur Verwaltung einer Anmeldung nach Anspruch 10, wobei die Zugangsentität dafür ausgelegt ist, die Uploadgeschwindigkeit des ersten Endgerätes auf einen Wert unterhalb des maximalen Wertes der Uploadgeschwindigkeit, der ihm zugewiesen ist, zu begrenzen.

12. Computerprogramm, welches Anweisungen für die Durchführung des Verfahrens nach Anspruch 1, wenn dieses Programm von einem Prozessor ausgeführt wird, aufweist.

13. Aufzeichnungsmedium, auf dem das Computerprogramm nach Anspruch 12 gespeichert ist.

**Claims**

1. Method of managing subscription to a service offered in a communication network (101) by a first terminal (301), said first terminal being a source terminal; said communication network comprising a second terminal (302) and said service comprising a transmission of digital information; in which an admission entity previously obtains a maximum value of upload bitrate ($D_{up1}$, $D_{up2}$) and a value of download bitrate ($D_{down1}$, $D_{down2}$) respectively allocated to the first and second terminals; said method comprising the following steps at the level of the admission entity (601) of the network:

   /1/ receiving (201) an admission request in respect of a subscription (902) of the second terminal to the service offered by the first terminal;
   /2/ taking (202) a decision regarding admission or denial of subscription of the second terminal on the basis of the maximum value of upload bitrate allocated to the first terminal and of the value of download bitrate allocated to the second terminal; and
   /3/ emitting (203) a response indicating said decision,

   in which, at least one other service being offered in the network by at least one other terminal (303) to which a maximum value of upload bitrate is allocated, the second terminal is already subscribed to said other service; in which the maximum value of upload bitrate allocated to said other terminal is stored as service bitrate value associated with the second terminal; in which step /2/ is performed furthermore on the basis of said service bitrate value; and in which, if the requested subscription is admitted, the maximum value of upload bitrate allocated to the first terminal is added to the service bitrate value associated with the second terminal.

2. Method of managing subscription according to Claim 1, furthermore comprising the following steps:

   /a/ receiving an information item relating to an unsubscription (42) of the second terminal from the service offered by the first terminal;
   /b/ updating the service bitrate value associated with the second terminal by subtracting the maximum value of upload bitrate allocated to the first terminal;
   /c/ acknowledging receipt of this information item relating to the unsubscription (43).

3. Method of managing subscription according to Claim 1, in which, when the maximum value of upload bitrate allocated to the first terminal is increased, steps /2/ and /3/ are performed again.

4. Method of managing subscription according to Claim 1, in which, when the value of download bitrate allocated to the second terminal is reduced, steps /2/ and /3/ are performed again.

5. Method of managing subscription according to Claim 1, in which a first unicast send address ($@_{uni1}$) and a second multicast address ($@_{multi1}$) being allocated to the first terminal (301), and a third unicast send address ($@_{uni2}$) being allocated to the second terminal (302); in which the maximum value of upload bitrate allocated to the first terminal is stored in association with the first unicast send address and the value of download bitrate allocated to the second terminal is stored in association with the third unicast send address; and in which said admission request (902) indicates the first address relating to the first terminal and the third address relating to the second terminal.

6. Method of managing subscription according to Claim 1, the second terminal (302) having access to said network via an access entity (502); said method comprising the following steps at the level of said access entity:

   /i/ receiving a request for subscription (901) of the second terminal to the service offered by the first terminal;
   /ii/ transmitting an admission request in respect of said subscription to an admission entity (601); and
   /iii/ on receipt of a response indicating the admission of the second terminal to the service, transmitting the digital information received to the second terminal;

   in which in step /ii/, if the digital information are not already received, the following steps are performed:

- emitting a request for subscription to the service destined for the network; and
- receiving the digital information.

7. Method of managing subscription according to Claim 6, furthermore comprising the following steps:

    - receiving a request for unsubscription (41) of the second terminal from the service offered by the first terminal;
    - transmitting an information item relating to said unsubscription to the admission entity; and
    - halting the transmission of the digital information destined for the second terminal;

    in which, when the second terminal is the last terminal subscribed to the service for the access entity, said access entity transmits the request for unsubscription to the network.

8. Admission entity (601) suitable for managing a subscription to a service offered in a communication network (101) by a first terminal (301); said communication network comprising a second terminal (302); said service comprising a transmission of digital information; said admission entity comprising:

    - an obtaining unit (60) suitable for obtaining a maximum value of upload bitrate ($D_{up1}$) and a value of download bitrate ($D_{down2}$) respectively allocated to the first terminal and to the second terminal;
    - a reception unit (61) suitable for receiving an admission request (901) in respect of a subscription of the second terminal to the service offered by the first terminal;
    - a decision unit (62) suitable for taking a decision regarding admission or denial of subscription of the second terminal on the basis of the maximum value of upload bitrate allocated to the first terminal and of the value of download bitrate allocated to the second terminal; and
    - a transmission unit (63) suitable for emitting a response indicating said decision,

    said service comprising at least one other service offered in the network by at least one other terminal (303) to which a maximum value of upload bit rate is allocated, the second terminal is already a subscriber to said other service; the maximum value of upload bit rate allocated to said other terminal being stored as service bit rate value associated with the second terminal; the decision taking regarding admission or refusal of subscription of the second terminal on the basis of the maximum value of upload bit rate allocated to the first terminal and of the value of download bit rate allocated to the second terminal being performed moreover on the basis of said service bit rate value; if the subscription requested is admitted, the maximum value of upload bit rate allocated to the first terminal being added to the service bit rate value associated with the second terminal.

9. Admission entity (601) according to Claim 8, in which,
at least one other service being offered in the network by at least one other terminal (303) to which is allocated a maximum value of upload bitrate, the second terminal is already subscribed to said other service;
the maximum value of upload bitrate allocated to said other terminal being stored as service bitrate value associated with the second terminal;
the decision unit taking a decision on the basis furthermore of said service bitrate value;
the admission entity furthermore comprising an update unit suitable for updating the service bitrate value associated with the second terminal by adding thereto the maximum value of upload bitrate allocated to the first terminal if the requested subscription is admitted.

10. System for managing subscription to a service offered in a communication network (101) by a first terminal (301);
said communication network comprising a second terminal (302) and said service comprising a transmission of digital information;
said system comprising an admission entity (601) according to Claim 9 and an access entity (502) comprising:

    - a reception unit (64) suitable for receiving a request for subscription (901) of the second terminal to the service offered by the first terminal;
    - a transmission unit (65) suitable for transmitting an admission request in respect of a subscription to an admission entity (601) and for transmitting the digital information received to the second terminal if the subscription is admitted by the admission entity; and
    - a subscription unit (66) suitable for requesting the network for reception of the digital information if the latter is not already received.

11. System for managing subscription according to Claim 10, in which the access entity is suitable for limiting the upload bitrate of the first terminal short of the maximum value of upload bitrate which is allocated to it.

12. Computer program comprising instructions for the implementation of the method according to Claim 1, when this program is executed by a processor.

**13.** Recording medium on which the computer program according to Claim 12 is stored.

FIG.1.

FIG.2.

FIG.3.

FIG.4.

101

601

502

S

ACC

req ab

1004

21

req desab

51

21

FIG.5.

FIG.6.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008112324 A
- CA 2276682 A1
- WO 2005071903 A1